# EUROPÄISCHE PATENTSCHRIFT

(11) **EP 1 581 787 B1**
(45) Veröffentlichungstag und Bekanntmachung des Hinweises auf die Patenterteilung: **04.08.2010**
(21) Anmeldenummer: 03799599.0
(22) Anmeldetag: 23.12.2003
(51) Int. Cl.: G01L 1/20

(54) **DRUCKSENSOR MIT ELASTISCHER SENSORSCHICHT, DEREN OBERFLÄCHE MIKROSTRUKTURIERT IST**
PRESSURE SENSOR COMPRISING AN ELASTIC SENSOR LAYER WITH A MICROSTRUCTURED SURFACE
CAPTEUR DE PRESSION POURVU D'UNE COUCHE DE DETECTION ELASTIQUE MICROSTRUCTUREE

(30) Priorität: 07.01.2003 EP 03100008
(43) Veröffentlichungstag der Anmeldung: 05.10.2005
(73) Patentinhaber: IEE INTERNATIONAL ELECTRONICS & ENGINEERING S.A., 6468 Echternach (LU)
(72) Erfinder: BIECK, Werner, 54459 Wiltingen (DE); KIRSCH, Aloyse, L-5316 Contern (LU); SCHUMACHER, Alain, L-6670 Mertert (LU); SCHOOS, Aloyse, L-8094 Bertrange (LU)
(74) Vertreter: Office Freylinger
(86) Internationale Anmeldenummer: PCT/EP2003/051099
(87) Internationale Veröffentlichungsnummer: WO 2004/061401

(56) Entgegenhaltungen:
- DE-A- 3 039 256
- US-A- 4 996 511
- US-A- 5 302 936
- US-A- 6 109 117
- US-A1- 2001 008 389

## Beschreibung

### Einleitung

Die vorliegende Erfindung betrifft einen Drucksensor, insbesondere einen auf mikromechanischer Basis arbeitenden Drucksensor.

Das Einsatzgebiet von Drucksensoren zum Erfassen einer Kraft bzw. eines Drucks auf einer Fläche hat in den letzten Jahren stark zugenommen. Dabei werden bei den meisten Anwendungen vor allem kostengünstig herstellbare Drucksensoren gebraucht. Aus diesem Grund haben vor allem Foliendrucksensoren eine sehr starke Verbreitung gefunden.

Einen solchen kostengünstig herstellbaren und vielseitig einsetzbaren Foliendrucksensor beschreibt beispielsweise das Dokument US-A-4,314,227. Die in diesem Dokument beschriebenen folienartigen Drucksensoren weisen zwei Trägerplatten auf, die mittels eines Abstandhalters in einem gewissen Abstand zueinander angeordnet sind. Mindestens eine der Trägerplatten ist dabei flexibel ausgestaltet, so dass die flexible Trägerplatte bei einer auf den Sensor wirkenden Kraft gegen die Rückstellkraft der flexiblen Trägerplatte auf die andere Trägerplatte gepresst werden kann. Auf einer der Trägerfolien sind zwei Elektrodenstrukturen in einem gewissen Abstand zueinander angeordnet während auf der anderen Trägerplatte eine Schicht aus einem halbleitenden Material angeordnet ist, die unter der Einwirkung einer äußeren Kraft auf die beiden Elektrodenstrukturen gepresst wird.

Die halbleitende Schicht weist ein partikelförmiges Material auf, so dass die Oberfläche der halbleitenden Schicht eine gewisse Rauhigkeit mit einer Vielzahl von hervorstehenden, stochastisch verteilten Kontaktpunkten aufweist. Bei einsetzendem Druck auf das Sensorelement werden zunächst die beiden Trägerplatten zusammengeführt, bis ein erster Kontakt zwischen den Elektrodenstrukturen und der halbleitenden Schicht hergestellt wird. Bis zu diesem Einsatzpunkt ist der elektrische Widerstand des Sensors unendlich. Bei zunehmendem Druck wird die halbleitende Schicht weiter an die Elektrodenstrukturen gepresst, wobei sich die Kontaktfläche zwischen den Elektrodenstrukturen und der halbleitenden Schicht vergrößert. Dabei erhöht sich gleichzeitig die Zahl der Kontaktpunkte, an denen die halbleitende Schicht mit den Elektrodenstrukturen elektrisch kontaktiert sind, so dass der elektrische Flächenwiderstand zwischen der halbleitenden Schicht und den Elektrodenstrukturen kleiner wird. Dieser verringerte Flächenwiderstand kann gemessen werden und dient als Messwert für den auf den Sensor einwirkenden Druck. Lässt der auf den Sensor einwirkende Druck nach, bewirkt die elastische Rückstellkraft der Trägerplatten, dass der Abstand zwischen der halbleitenden Schicht und der Elektrodenstrukturen sich erhöht und als Folge die Zahl der Kontaktpunkte abnimmt.

Die Zellenmechanik eines solchen Drucksensors kann über ein Membranmodell beschrieben werden. Die Auslenkung der Membran ist proportional zum einwirkenden Druck und hängt darüber hinaus von den elastischen Materialeigenschaften, der Materialstärke und der Einspannung der Membran ab. Oberhalb des Einsatzpunkts hängt der sich einstellende Widerstand im wesentlichen vom druckabhängigen Radius der Kontaktfläche ab. Hieraus folgt, dass die elektrische Responsefunktion des Drucksensors stark auf Abweichungen einer bestimmten Zellenkonfiguration reagiert und beispielsweise bei einer Deformation der Membran aufgrund von Feuchtigkeit oder Temperaturveränderungen starken Variationen unterworfen ist. Aus diesem Grund sind derartige Drucksensoren insbesondere in Bereichen, in denen ein präziser Einsatzpunkt bei verhältnismäßig kleinen Drücken benötigt wird, nicht geeignet. In der Tat führen bereits kleinste Veränderungen in der Zellenkonfiguration, z. B. durch Deformation der Membran, zu Verschiebungen des Einsatzpunktes, die in der Größenordnung der geforderten Einsatzschwelle liegen. Darüber hinaus führt die stochastische Verteilung der Kontaktpunkte in der halbleitenden Schicht zu einem schwer kontrollierbaren Verhalten des Sensors oberhalb seiner Einsatzschwelle.

Ein anderer Typ von Drucksensoren ist aus den Dokumenten US 4,996,511 und DE 30 39 256 bekannt. Der hier beschriebenen Drucksensoren umfassend jeweils eine erste Trägerfolie mit einer ersten Sensorschicht und eine zweite Trägerfolie mit einer zweiten Sensorschicht, wobei die erste und zweite Trägerfolie derart zueinander angeordnet sind, dass die erste und zweite Sensorschicht einander zugewandt sind. Die erste und zweite Sensorschicht sind derart ausgestaltet, dass der elektrische Widerstand zwischen zwei Anschlusskontakten des Sensors im wesentlichen von der Ausdehnung einer Kontaktfläche zwischen den beiden Sensorschichten abhängt. Mindestens die zweite Sensorschicht weist überdies im Bereich einer aktiven Zone des Drucksensors eine mikrostrukturierte Oberfläche mit darin ausgebildeten definierten Strukturen aus einem elastischen Material auf. Wie bei dem oben beschriebenen Foliensensor, sind bei den aus den beiden letzteren Dokumenten bekannten Drucksensoren die Sensorschichten bei unbelastetem Drucksensor in einem gewissen Abstand zueinander angeordnet.

### Aufgabe der Erfindung

Aufgabe der vorliegenden Erfindung ist es folglich, ein verbessertes Drucksensorelement vorzuschlagen.

### Allgemeine Beschreibung der Erfindung

Diese Aufgabe wird erfindungsgemäß gelöst durch einen Drucksensor nach Anspruch 1. Dieser Drucksensor umfasst eine erste Trägerfolie mit einer ersten Sensorschicht und eine zweite Trägerfolie mit einer zweiten Sensorschicht, wobei die erste und zweite Trägerfolie derart zueinander angeordnet sind, dass die erste und zweite Sensorschicht einander zugewandt sind. Die erste und zweite Sensorschicht sind derart ausgestaltet, dass der elektrische Widerstand zwischen zwei Anschlusskontakten des Sensors von der Ausdehnung einer Kontaktfläche zwischen den beiden Sensorschichten abhängt. Des weiteren weist mindestens die zweite Sensorschicht im Bereich einer aktiven Zone des Drucksensors eine mikrostrukturierte Oberfläche mit darin ausgebildeten definierten Strukturen aus einem elastischen Material auf. Erfindungsgemäß sind die erste und zweite Trägerfolie derart zueinander angeordnet, dass bei unbelastetem Drucksensor die Strukturen der zweiten Sensorschicht mit der ersten Sensorschicht in Kontakt stehen und mit dieser die Kontaktfläche ausbilden und wobei die Strukturen unter dem Einfluss einer auf den Drucksensor einwirkenden Kraft komprimiert werden, so dass die Ausdehnung der Kontaktfläche vergrößert wird.

Bei dem vorliegenden Drucksensor werden die definiert in der zweiten Sensorschicht ausgebildeten Strukturen aus elastischem Material unter dem Einfluss einer auf den Sensor wirkenden Kraft elastisch komprimiert. Durch die hiervon hervorgerufene Verformung der Strukturen vergrößert sich die Kontaktfläche zwischen den jeweiligen Strukturen und der ersten Sensorschicht. Lässt die auf den Drucksensor einwirkende Kraft nach, bewirkt die Rückstellkraft der elastischen Strukturen dass die durch die Kompression erzeugte Verformung rückgängig gemacht wird wodurch sich die Kontaktfläche zwischen den jeweiligen Strukturen und der ersten Sensorschicht erneut verkleinert.

Im Gegensatz zu den bekannten Foliendrucksensoren ist bei dem vorliegenden Drucksensor demnach sowohl das elektrische Verhalten als auch das elastische Verhalten durch die mikrostrukturierte Oberfläche der zweiten Sensorschicht bestimmt. Folglich ist das Widerstandsverhalten des vorliegenden Drucksensors weitgehend unabhängig von den mechanischen Eigenschaften der Trägerfolien. Eine eventuelle Deformation der Folien oder eine Veränderung der mechanischen Folieneigenschaften aufgrund von Temperaturänderungen wirkt sich daher nicht wesentlich auf die Responsefunktion des Sensors aus. Da die Rückstellkräfte des Drucksensors nicht länger von den Trägerfolien aufgebracht werden müssen, können die Trägerfolien aus kostengünstigeren Materialien und mit einer geringeren Stärke hergestellt werden als bei herkömmlichen Foliendrucksensoren. Hieraus ergibt sich ein beträchtliches Einsparungspotential insbesondere gegenüber Foliendrucksensoren, deren Einsatzzweck die Verwendung von verhältnismäßig teuren PI-Trägerfolien voraussetzt.

Darüber hinaus beruht die Widerstandsänderung des erfindungsgemäßen Drucksensors nicht auf einer Erhöhung der Zahl der Kontaktpunkte zwischen der ersten und der zweiten Sensorschicht sondern auf der Erhöhung der Kontaktfläche infolge einer Kompression der definiert auf- bzw. eingebrachten Strukturen der mikrostrukturierten Oberfläche. Die druckabhängige Veränderung der Kontaktfläche, und somit das elektrische Verhalten des erfindungsgemäßen Sensors, kann durch eine entsprechende, wohl definierte Formgebung der Mikrostrukturen d.h. durch eine wohldefinierte Topographie der zweiten Sensorschichtoberfläche definiert gesteuert werden. Eine Abhängigkeit des Druckverhaltens von einer stochastischen Verteilung von Partikelmaterial wird demnach wirkungsvoll verhindert. Der Fachmann wird in diesem Zusammenhang verstehen, dass die definiert in die zweite Sensorschicht eingebrachten Strukturen groß sind gegenüber einer typischen Rauhigkeit eines Schichtmaterials. Die Strukturen weisen beispielsweise eine Ausdehnung auf, die um mindestens eine Größenordnung größer ist als eine typische Rauhigkeit. Hierdurch ist gewährleistet, dass das elektrische Verhalten tatsächlich von den definiert eingebrachten Strukturen bewirkt wird und nicht durch Phänomene, die von der Oberflächenrauhigkeit der Schicht hervorgerufenen werden. Diese klare Trennung des elektrischen Verhaltens von stochastischen Phänomenen ermöglicht eine reproduzierbare Herstellung von äußerst sensiblen Drucksensoren.

Es ist anzumerken, dass bei dem vorliegenden Drucksensor die erste und zweite Sensorschicht auch bereits dann eine Kontaktfläche ausbilden, wenn keine äußere Kraft auf das Sensorelement wirkt. Demzufolge weist das vorliegende Sensorelement bereits im nicht belasteten Zustand einen endlichen, und damit messbaren, elektrischen Widerstand auf. Der erfindungsgemäße Drucksensor weist somit keine Einsatzschwelle in seinem elektrischen Verhalten auf so dass selbst kleinste Kräfte bereits eine Veränderung des elektrischen Widerstands des Drucksensors hervorrufen. Darüber hinaus erlaubt der endliche Widerstand des unbelasteten Drucksensors eine wirksame Überprüfung der Zuleitungen des Drucksensors, da der endliche Widerstand zu jedem Zeitpunkt gemessen werden kann. Bei den oben beschriebenen Foliendrucksensoren ist eine solche Überprüfung der Zuleitungen im unbelasteten Zustand nicht ohne weiteres möglich.

Es ist weiterhin anzumerken, dass die erste Sensorschicht vorzugsweise ein erstes resistives Material umfasst, das ebenfalls elastische Eigenschaften aufweist. In diesem Fall werden unter der Einwirkung eines Drucks beide Sensorschichten komprimiert, so dass die Rückstellkraft der beiden Sensorschichten beim Nachlassen der äußeren Kraft eine Rückführung in die Ausgangslage bewirkt. Darüber hinaus kann auch die erste Sensorschicht eine mikrostrukturierte Oberfläche aufweisen, wobei die Strukturen der ersten Sensorschicht und diejenigen der zweiten Sensorschicht gleiche oder unterschiedliche Formen und/oder Ausdehnungen aufweisen können.

In einer vorteilhaften Ausgestaltung des Drucksensors umfasst die erste Sensorschicht ein erstes resistives Material, das beispielsweise flächig im Bereich der aktiven Zone des Drucksensors auf die erste Trägerfolie aufgebracht ist. Unter resistivem Material ist hierbei ein Material zu verstehen, das eine elektrische Leitfähigkeit aufweist, dessen spezifischer Widerstand jedoch wesentlich höher ist als der von konduktiven Materialien wie beispielsweise Metallen. Mit einem derartigen resistiven Material lässt sich ein kontaktflächenabhängiges Widerstandsverhalten ohne komplizierte Formgebung der Sensorschicht einfach erzeugen.

In einer vorteilhaften Ausgestaltung des Drucksensors, umfassen die Strukturen der zweiten Sensorschicht ein zweites resistives Material. Das zweite resistive Material ist vorzugsweise derart auf das erste resistive Material abgestimmt, dass sich ein vorbestimmtes Verhalten des Flächenwiderstands zwischen den beiden Sensorschichten ergibt. Es ist anzumerken, dass vorzugsweise die gesamte zweite Sensorschicht aus dem zweiten resistiven Material aufgebaut ist. Eine solche Ausgestaltung zeichnet sich durch einen besonders einfachen Aufbau und demnach durch eine kostengünstige Herstellung aus. Je nach Anwendung des Drucksensors kann es jedoch wünschenswert sein, wenn die zweite Sensorschicht aus einer Basisschicht und einer auf der Basisschicht angeordneten Strukturschicht besteht, wobei die Basisschicht aus einem Material mit bestimmten mechanischen oder elektrischen Eigenschaften aufgebaut ist während lediglich die Strukturschicht mit den darin ausgebildeten Strukturen aus dem zweiten resistiven Material besteht.

Um ein besonders dynamisches Verhalten des Drucksensors zu gewährleisten, kann mindestens eine der Strukturen zumindest bereichsweise mit einem konduktiven Material, z. B. einem Metall, beschichtet sein. Bei einer solchen Ausgestaltung kann selbst bei einer geringen Änderung der auf den Sensor wirkenden Kraft eine verhältnismäßig große Widerstandsänderung des Drucksensors hervorgerufen werden. Dem Fachmann wird leicht verständlich sein, dass bei einer derartigen Ausgestaltung vorteilhaft sämtliche Strukturen bereichsweise mit einem konduktiven Material beschichtet sind, wobei je nach elektrischer Verschaltung darauf zu achten ist, dass die konduktiven Beschichtungen der einzelnen Strukturen durch isolierende Bereiche voneinander getrennt sind.

In einer anderen Ausgestaltung der zweiten Sensorschicht umfassen die Strukturen der zweiten Sensorschicht ein isolierendes Material, und mindestens eine der Strukturen ist zumindest bereichsweise mit einem konduktiven oder einem zweiten resistiven Material beschichtet. Eine solche Ausgestaltung der zweiten Sensorschicht kann je nach verwendeten Materialien kostengünstiger herstellbar sein, als eine Ausgestaltung, bei der die gesamten Sturkuren aus einem resistiven Material aufgebaut sind. Darüber hinaus kann eine derartige Ausgestaltung je nach Anwendungsbereich des Drucksensors mechanische oder elektrische Vorteile gegenüber den oben beschriebenen Ausgestaltungen aufweisen.

Es ist anzumerken, dass das erste und das zweite resistive Material je nach Ausgestaltung des Drucksensors identisch sein können. Alternativ können die erste und zweite Sensorschicht aus unterschiedlichen resistiven Materialien aufgebaut sein. In diesem Fall kann das zweite resistive Material beispielsweise einen geringeren Widerstand aufweisen als das erste resistive Material. Insbesondere bei einer oben beschriebenen Ausgestaltung, bei der die Strukturen der zweiten Sensorschicht ein isolierendes Material aufweisen und bereichsweise mit einem zweiten resistiven Material beschichtet sind, kann es in diesem Fall je nach elektrischer Verschaltung des Drucksensors notwendig sein, die Beschichtungen der einzelnen Strukturen durch isolierende Bereiche voneinander zu trennen.

Es ist anzumerken, dass die oben genannten Ausgestaltungen der Sensorschichten eine besonders einfache Herstellung der Schichten erlauben, da komplizierte Formen der Sensorschichten zur Erreichung des gewünschten drucksensitiven Verhaltens nicht notwendig sind. Die so aufgebauten Drucksensoren können dementsprechend besonders zuverlässig und kostengünstig hergestellt werden.

Die elektrische Beschaltung der Drucksensoren kann auf verschiedene Arten erfolgen. So kann beispielsweise die erste Sensorschicht an zwei räumlich getrennten Anschlusspunkten von den Anschlusskontakten kontaktiert sein. Die beiden Anschlusspunkte können sich beispielsweise bezüglich der aktiven Zone des Sensors gegenüberliegen. Der elektrische Widerstand eines derartigen Drucksensors ist im unbelasteten Zustand im wesentlichen durch das zwischen den beiden Kontaktpunkten angeordnete erste resistive Material der ersten Sensorschicht gegeben. Beim Einwirken einer Kraft auf den Drucksensor wird die zweite Sensorschicht über die komprimierten Strukturen zu der ersten Sensorschicht elektrisch parallel geschaltet, wobei der Widerstand zwischen den beiden Anschlusskontakten aufgrund der Erhöhung der Kontaktfläche zwischen den beiden Sensorschichten sinkt.

In einer alternativen Ausgestaltung, ist jede der ersten und zweiten Sensorschicht auf der der jeweils anderen Sensorschicht abgewandten Seite flächig von einem der Anschlusskontakte kontaktiert. Die Kontaktierung erfolgt vorzugsweise dadurch, dass die beiden Anschlusskontakte flächig ausgebildet und die Sensorschichten flächig auf dem jeweiligen Anschlusskontakt aufgebracht ist. In diesem Fall ist der Widerstand des Drucksensors durch den kombinierten Widerstand der beiden Sensorschichten quer zu den Schichten gegeben, wobei der Widerstand an der Grenzfläche zwischen den beiden Sensorschichten dominiert. Je größer die Kontaktfläche zwischen den beiden Sensorschichten ist, desto kleiner wird dieser Grenzflächenwiderstand.

In einer weiteren Ausgestaltung die auf der Parallelschaltung zweier resistiver Schichten beruht, ist jede der ersten und zweiten Sensorschicht an jeweils einem Kontaktpunkt von einem der Anschlusskontakte kontaktiert, wobei die beiden Kontaktpunkte sich bezüglich der aktiven Zone des Sensors gegenüberliegen.

Es ist anzumerken, dass das erste und/oder zweite resistive Material vorzugsweise ein leitfähiges Elastomermaterial umfasst. Diese leitfähigen Elastomermaterialien, beispielsweise mit leitenden Pigmenten gefüllte Polymere oder selbstleitende Polymere, sind kostengünstig und lassen sich gut verarbeiten. Darüber hinaus weisen diese Materialien eine hohe Elastizität auf, die eine reversible Kompression der Strukturen ermöglicht.

Die Strukturen der mikrostrukturierten Oberfläche können auf verschiedene Arten hergestellt werden. Dem Fachmann wird klar werden, dass derartige Strukturen, die vorzugsweise regelmäßig in der Sensorschicht eingebracht werden, in einem Spritzgussverfahren, einem chemischen, elektrochemischen oder photochemischen Ätzverfahren, einem Prägeverfahren, einem Elektronenstrahlbearbeitungsverfahren und/oder einem Laserstrahlbearbeitungsverfahren herstellbar sind. Diese Verfahren können aktiv die Sensorschicht selbst strukturieren, oder passiv ein Werkzeug (Negativ) formen, um damit die Sensorschicht zu fertigen.

Die mit diesen Verfahren hergestellten Strukturen der mikrostrukturierten Oberfläche weisen dabei vorzugsweise eine sich in Richtung der ersten Sensorschicht verengende Form auf. Mögliche Formen sind beispielsweise die Form einer Halbkugel, einer Pyramide, eines Pyramidenstumpfs, eines Kegels, eines Kegelstumpfs, etc.

Abschließend sei zu bemerken, dass die erste und zweite Trägerfolien vorteilhaft miteinander verklebt sind. Dies geschieht z.B. dadurch, dass die nichtstrukturierten Bereiche der zweiten Sensorschicht mit einem Kleber beschichtet sind (Spacer), um so die erste Trägerfolie im Abstand R zu positionieren.

### Beschreibung anhand der Figuren

Nachfolgend wird eine Ausgestaltung der Erfindung anhand der beiliegenden Figuren beschrieben. Es zeigen:
- Fig.1:: schematisch einen Schnitt durch einen Drucksensor (a) sowie einen vergrößerten Ausschnitt aus diesem Drucksensor (b) zur Veranschaulichung der durch eine auf den Drucksensor bewirkten Vorgänge;
- Fig.2:: einen Schnitt durch eine erste Ausgestaltung eines Drucksensors (a) sowie eine Draufsicht auf diesen Drucksensor;
- Fig.3-5:: weitere Ausgestaltungen eines Drucksensors.

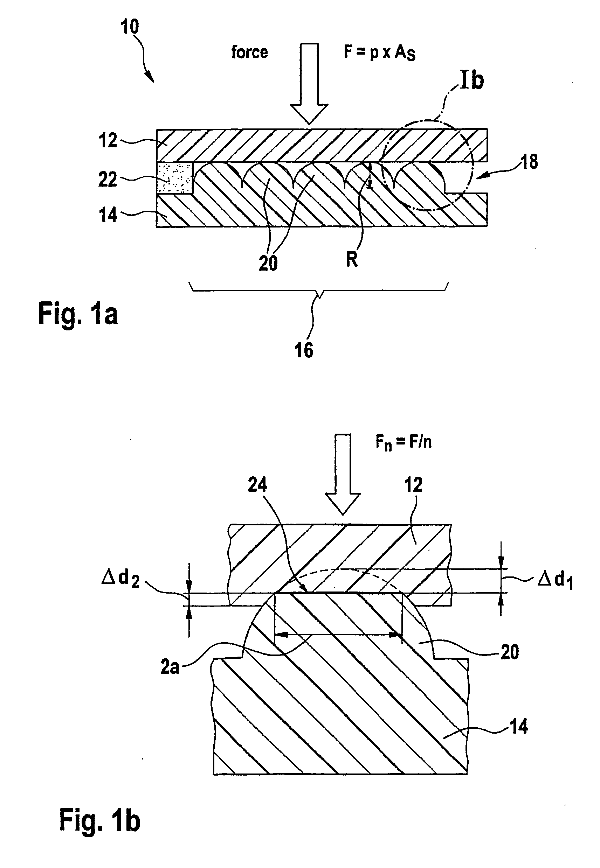

Die vorliegende Erfindung betrifft Drucksensoren, die auf der elastomechanischen Deformation einer mikrostrukturierten Oberfläche beruhen. Fig. 1a zeigt schematisch den Aufbau eines derartigen Drucksensors 10. Der Sensor 10 umfasst im wesentlichen eine erste Sensorschicht 12 und eine zweite Sensorschicht 14 aus einem elastischen und resistiven Material, die im allgemeinen jeweils auf eine (nicht dargestellte) Trägerfolie (Polymerfolie) aufgebracht sind. Die Sensorschichten 12 und 14 sind derart zueinander angeordnet, dass sie in einer aktiven Zone 16 des Drucksensors 10 eine Kontaktfläche miteinander ausbilden.

Die zweite Sensorschicht 14 weist im Bereich einer aktiven Zone 16 des Drucksensors 10 eine mikrostrukturierte Oberfläche 18 mit darin ausgebildeten definierten Strukturen 20 aus einem elastischen Material auf. Fig. 1a zeigt eine typische Ausgestaltung einer solchen druckempfindlichen Mikrostruktur 18. Die zweite Sensorschicht 14 zeigt hierzu im Bereich der aktiven Zone 16 eine wohldefinierte Topographie auf, die in der dargestellten Ausführung durch sphärische Strukturen 20 mit Radius R gebildet wird. Diese Strukturen 20 sind groß gegenüber einer typischen Oberflächenrauhigkeit, z.B. um mindestens eine Größenordnung. Die nichtstrukturierten Bereiche der Sensorschicht 14 sind mit einem Kleber 22 beschichtet (Spacer), um so die erste Sensorschicht 12 derart im Abstand R zu den nichtstrukturierten Bereichen zu positionieren, dass die erste Sensorschicht 12 mit den Strukturen 20 in Kontakt ist.

Eine einwirkende Kraft F komprimiert beide Sensorschichten 12 und 14 und im Falle von n Mikrostrukturen wirkt auf jede einzelne eine Kraft F/n. Die elastomechanische Deformation Δd₁ und Δd₂ der zweiten bzw. der ersten Sensorschicht führt dabei zu einer druckabhängigen Kontaktfläche 24 zwischen den beiden Sensorschichten 12 und 14 (siehe Fig. 1b). Die Form der Kontaktfläche 24 und die kraft- bzw. druckabhängige Entwicklung dieser Fläche hängen von den elastischen Materialeigenschaften und der gewählten Oberflächentopographie ab. Die elastischen Materialeigenschaften sind dabei vorzugsweise derart gewählt, dass die Deformation rein elastisch erfolgt (typische Kompressionswege für einen Drucksensor liegen beispielsweise bei etwa 10 µm bei einer Ausdehnung R der Strukturen von etwa 50 µm), so dass der Drucksensor beim Nachlassen der Kraft F unter dem Einfluss der Rückstellkräfte in den Sensorschichten seinen Ausgangszustand wieder einnimmt.

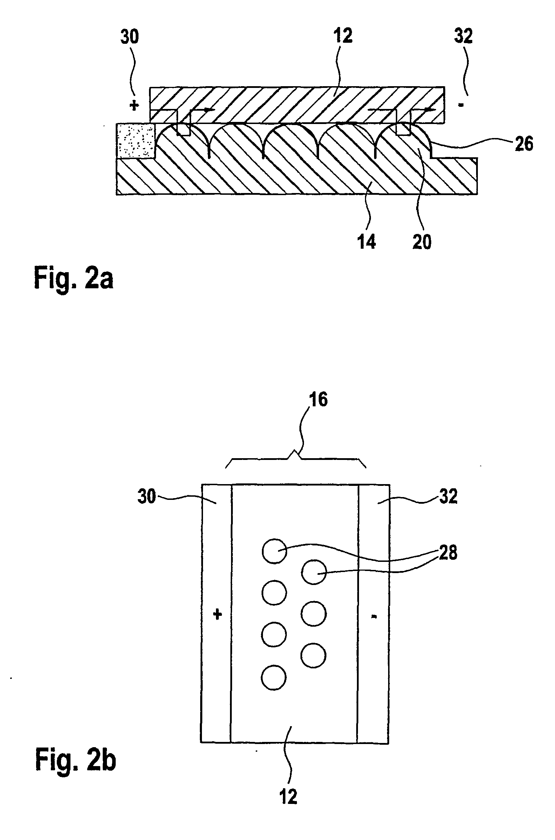

Je nach elektrischer Beschaltung lässt sich die Kontaktfläche auf verschiedene Weise messtechnisch erfassen und auswerten. Eine erste Ausgestaltung eines Drucksensors ist hierzu in Fig. 2 a & b dargestellt. Die nichtstrukturierte Sensorschicht 12 weist bei dieser Ausgestaltung ein resistives Material auf, während zumindest einige der Strukturen 20 der zweiten Sensorschicht 14 mit einem elektrisch konduktiven Material 26 beschichtet sind. Mit zunehmendem Druck wächst die Größe konduktiver Inseln 28 in Kontakt mit der resistiven ersten Sensorschicht 12 systematisch an (siehe auch Fig. 2b). Liegen, wie in der Fig. 2 a und b gezeigt, beide elektrischen Anschlusskontakte 30 und 32 beabstandet in der ersten Sensorschicht 12, so fällt aufgrund des Inselwachstums mit zunehmendem Druck der gemessene elektrische Widerstand zwischen den Anschlusskontakten 30 und 32. Voraussetzung für diese elektrische Konfiguration ist eine nicht durchgängige konduktive Beschichtung der strukturierten Oberfläche (Oberflächenleitfähigkeit).

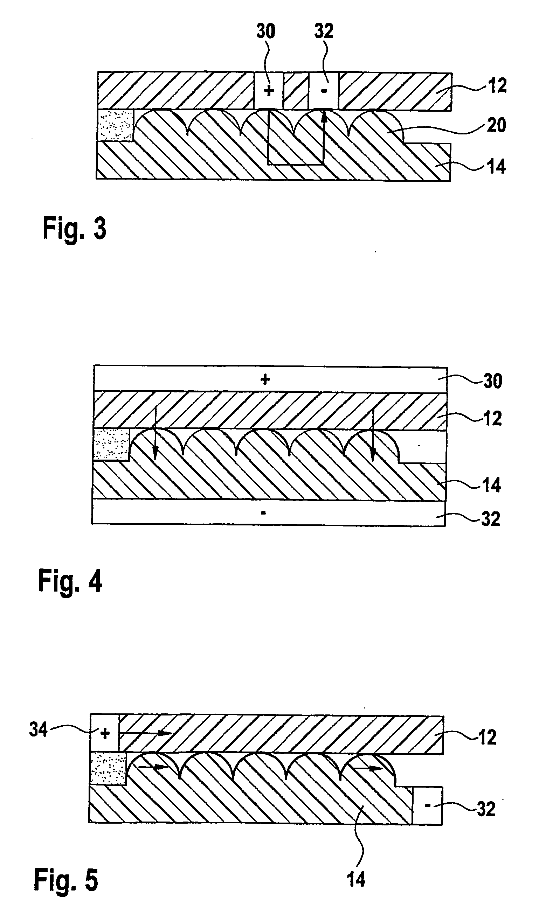

Fig. 3 zeigt eine andere Ausgestaltung eines Drucksensors, bei der die elektrischen Anschlusskontakte 30, 32 in der ersten Sensorschicht 12 liegen. Bei dieser Ausgestaltung weist die zweite Sensorschicht 14 ein resistives Material ohne konduktive Beschichtung auf. Bei dieser Ausgestaltung wird neben einer reinen Oberflächenleitung (Beschichtung) auch eine Volumenleitfähigkeit des Sensorschichtmaterials genutzt.

In den Figuren 4 und 5 sind Ausgestaltungen von Drucksensoren dargestellt, bei denen pro Sensorschicht nur ein elektrischer Anschlusskontakt 30 bzw. 32 vorliegt. Auch bei diesen Ausgestaltungen fällt der elektrische Widerstand mit zunehmendem Druck. Neben einer reinen Oberflächenleitung wird bei der Ausgestaltung nach Fig. 4 auch die Volumenleitfähigkeit der Sensorschichtmaterialien genutzt. Fig. 5 zeigt eine Ausgestaltung des Drucksensors die auf einer druckabhängigen Parallelschaltung zweier Schichten mit vergleichbarer Resistivität beruht. Mit steigendem Druck nimmt die Kontaktfläche und damit die elektrische Wechselwirkung zwischen beiden Schichten zu. Als Folge fällt der elektrische Gesamtwiderstand.

## Patentansprüche

1. Drucksensor (10) umfassend eine erste Trägerfolie mit einer ersten Sensorschicht (12) und eine zweite Trägerfolie mit einer zweiten Sensorschicht (14), wobei die erste und zweite Trägerfolie derart zueinander angeordnet sind, dass die erste und zweite Sensorschicht (12, 14) einander zugewandt sind, wobei die erste und zweite Sensorschicht (12, 14) derart ausgestaltet sind, dass der elektrische Widerstand zwischen zwei Anschlusskontakten (30,32) des Sensors (10) von der Ausdehnung einer Kontaktfläche (24) zwischen den beiden Sensorschichten (12, 14) abhängt, und wobei mindestens die zweite Sensorschicht (14) im Bereich einer aktiven Zone (16) des Drucksensors (10) eine mikrostrukturierte Oberfläche (18) mit darin ausgebildeten definierten Strukturen (20) aus einem elastischen Material aufweist, **dadurch gekennzeichnet, dass** die erste und zweite Trägerfolie derart zueinander angeordnet sind, dass bei unbelastetem Drucksensor (10) die Strukturen (20) der zweiten Sensorschicht (14) mit der ersten Sensorschicht (12) ein Kontakt stehen und mit dieser die Kontaktfläche (24) ausbilden und wobei die Strukturen (20) unter dem Einfluss einer auf den Drucksensor (10) einwirkenden Kraft komprimiert werden, so dass die Ausdehnung der Kontaktfläche (24) vergrößert wird.

2. Drucksensor (10) nach Anspruch 1, wobei die erste Sensorschicht (12) ein erstes resistives Material umfasst.

3. Drucksensor (10) nach Anspruch 1 oder 2, wobei die Strukturen (20) der zweiten Sensorschicht (14) ein zweites resistives Material umfassen.

4. Drucksensor (10) nach Anspruch 1 oder 2, wobei die Strukturen (20) der zweiten Sensorschicht (14) ein isolierendes Material umfassen und wobei mindestens eine der Strukturen (20) zumindest bereichsweise mit einem konduktiven oder einem zweiten resistiven Material beschichtet ist.

5. Drucksensor (10) nach Anspruch 3, wobei mindestens eine der Strukturen (20) zumindest bereichsweise mit einem konduktiven Material beschichtet ist.

6. Drucksensor (10) nach einem der Ansprüche 3 bis 5, wobei das zweite resistive Material, wenn zutreffend, einen geringeren Widerstand aufweist als das erste resistive Material.

7. Drucksensor (10) nach einem der Ansprüche 1 bis 6, wobei die erste Sensorschicht (12) an zwei beabstandeten Kontaktpunkten von den Anschlusskontakten (30, 32) kontaktiert ist.

8. Drucksensor (10) nach Anspruch 7, wobei die zwei Kontaktpunkte sich bezüglich der aktiven Zone des Sensors (10) gegenüberliegen.

9. Drucksensor (10) nach einem der Ansprüche 1 bis 6, wobei jede der ersten und zweiten Sensorschicht (12, 14) auf der der jeweils anderen Sensorschicht (14, 12) abgewandten Seite flächig von einem der Anschlusskontakte (30, 32) kontaktiert ist.

10. Drucksensor (10) nach einem der Ansprüche 1 bis 6, wobei jede der ersten und zweiten Sensorschicht (12, 14) an jeweils einem Kontaktpunkt von einem der Anschlusskontakte (30, 32) kontaktiert ist und wobei die beiden Kontaktpunkte sich bezüglich der aktiven Zone (16) des Sensors (10) gegenüberliegen.

11. Drucksensor (10) nach einem der vorhergehenden Ansprüche, wobei das erste und/oder zweite resistive Material ein leitfähiges Elastomermaterial umfasst.

12. Drucksensor (10) nach einem der vorhergehenden Ansprüche, wobei die Strukturen (20) der mikrostrukturierten Oberfläche (18) eine sich in Richtung der ersten Sensorschicht (12) verengende Form aufweisen.

13. Drucksensor (10) nach einem der vorhergehenden Ansprüche, wobei die Strukturen (20) der mikrostrukturierten Oberfläche (18) in einem Spritzgussverfahren, einem Ätzverfahren, einem Prägeverfahren, einem Elektronenstrahlbearbeitungsverfahren oder einem Laserstrahlbearbeitungsverfahren hergestellt sind.

14. Drucksensor (10) nach einem der vorhergehenden Ansprüche, wobei die erste und zweite Trägerfolien miteinander verklebt sind.

## Claims

1. A pressure sensor (10) comprising a first support film with a first sensor layer (12) and a second support film with a second sensor layer (14), the first and second support films being arranged relative to one another in such a way that the first and second sensor layers (12, 14) face one another, the first and second sensor layers (12, 14) being configured such that the electrical resistance between two terminal contacts (30, 32) of the sensor (10) is dependent on the extent of a contact surface (24) between the two sensor layers (12, 14), and at least the second sensor layer (14) having in the region of an active zone (16) of the pressure sensor (10) a microstructured surface (18) with defined structures (20) of a resilient material formed therein, **characterised in that** the first and second support films are arranged relative to one another in such a way that, when the pressure sensor (10) is not loaded, the structures (20) of the second sensor layer (14) are in contact with the first sensor layer (12) and form the contact surface (24) therewith and wherein the structures (20) are compressed under the influence of a force acting on the pressure sensor (10), such that the extent of the contact surface (24) is increased

2. A pressure sensor (10) according to claim 1, wherein the first sensor layer (12) comprises a first resistive material

3. A pressure sensor (10) according to claim 1 or claim 2, wherein the structures (20) of the second sensor layer (14) comprise a second resistive material

4. A pressure sensor (10) according to claim 1 or claim 2, wherein the structures (20) of the second sensor layer (14) comprise an insulating material and wherein at least one of the structures (20) is coated at least in places with a conductive or a second resistive material.

5. A pressure sensor (10) according to claim 3, wherein at least one of the structures (20) is coated at least in places with a conductive material.

6. A pressure sensor (10) according to any one of claims 3 to 5, wherein the second resistive material, if applicable, has a lower resistance than the first resistive material

7. A pressure sensor (10) according to any one of claims 1 to 6, wherein the first sensor layer (12) is contacted at two spaced contact points by the terminal contacts (30, 32).

8. A pressure sensor (10) according to claim 7, wherein the two contact points are opposite one another relative to the active zone of the sensor (10)

9. A pressure sensor (10) according to any one of claims 1 to 6, wherein each of the first and second sensor layers (12, 14) is contacted extensively by one of the terminal contacts (30, 32) on the side remote from the in each case other sensor layer (14, 12).

10. A pressure sensor (10) according to any one of claims 1 to 6, wherein each of the first and second sensor layers (12, 14) is contacted at in each case one contact point by one of the terminal contacts (30, 32) and wherein the two contact points are opposite one another relative to the active zone (16) of the sensor (10).

11. A pressure sensor (10) according to any one of the preceding claims, wherein the first and/or second resistive material comprises a conductive elastomeric material.

12. A pressure sensor (10) according to any one of the preceding claims, wherein the structures (20) of the microstructured surface (18) taper in shape towards the first sensor layer (12).

13. A pressure sensor (10) according to any one of the preceding claims, wherein the structures (20) of the microstructured surface (18) are produced using an injection moulding method, an etching method, an embossing method, an electron beam machining method or a laser beam machining method

14. A pressure sensor (10) according to any one of the preceding claims, wherein the first and second support films are adhesively bonded to one another

## Revendications

1. Capteur de pression (10) comprenant une première feuille de support avec une première couche de capteur (12) et une seconde feuille de support avec une seconde couche de capteur (14), la première et la seconde feuilles de support étant disposées l'une par rapport à l'autre de manière à ce que la première et la seconde couches de capteur (12, 14) soient tournées l'une vers l'autre, la première et la seconde couches de capteur (12, 14) étant réalisées de manière à ce que la résistance électrique entre deux contacts de connexion (30, 32) du capteur (10) dépende de l'étendue d'une surface de contact (24) entre les deux couches de capteur (12, 14) et au moins la seconde couche de capteur (14) étant pourvue, dans la région d'une zone active (16) du capteur de pression (10), d'une surface microstructurée (18) dans laquelle sont formées des structures définies (20) en matière élastique, **caractérisé en ce que** la première et la seconde feuilles de support sont disposées l'une par rapport à l'autre de manière à ce que les structures (20) de la seconde couche de capteur (14) soient en contact avec la première couche de capteur (12) et forment avec celle-ci la surface de contact (24) lorsque le capteur de pression (10) n'est soumis à aucune charge, et les structures (20) étant comprimées sous l'effet d'une force agissant sur le capteur de pression (10) de manière à ce que l'étendue de la surface de contact (24) soit augmentée

2. Capteur de pression (10) selon la revendication 1, la première couche de capteur (12) comprenant un premier matériau résistif

3. Capteur de pression (10) selon la revendication 1 ou 2, les structures (20) de la seconde couche de capteur (14) comprenant un second matériau résistif.

4. Capteur de pression (10) selon la revendication 1 ou 2, les structures (20) de la seconde couche de capteur (14) comprenant un matériau isolant et au moins une des structures (20) étant recouverte, au moins par endroits, d'un matériau conducteur ou d'un second matériau résistif

5. Capteur de pression (10) selon la revendication 3, au moins une des structures (20) étant recouverte, au moins par endroits, d'un matériau conducteur.

6. Capteur de pression (10) selon l'une des revendications 3 à 5, le second matériau résistif ayant, le cas échéant, une moins grande résistance que le premier matériau résistif

7. Capteur de pression (10) selon l'une des revendications 1 à 6, les contacts de connexion (30, 32) entrant en contact avec la première couche de capteur (12) en deux points de contact distants l'un de l'autre

8. Capteur de pression (10) selon la revendication 7, les deux points de contact étant opposés l'un à l'autre par rapport à la zone active du capteur (10).

9. Capteur de pression (10) selon l'une des revendications 1 à 6, dans lequel chacune des première et seconde couches de capteur (12, 14) est contactée respectivement par un des points de connexion (30, 32) sur toute la surface du côté éloigné de l'autre couche de capteur (14, 12).

10. Capteur de pression (10) selon l'une des revendications 1 à 6, un des points de connexion (30, 32) entrant en contact avec chacune des première et seconde couches de capteur (12, 14) en un point de contact respectif et les deux points de contact étant opposés l'un à l'autre par rapport à la zone active (16) du capteur (10).

11. Capteur de pression (10) selon l'une des revendications précédentes, le premier et/ou le second matériau/x résistif/s comprenant une matière élastomère conductrice

12. Capteur de pression (10) selon l'une des revendications précédentes, les structures (20) de la surface microstructurée (18) ayant une forme qui se rétrécit en direction de la première couche de capteur (12).

13. Capteur de pression (10) selon l'une des revendications précédentes, les structures (20) de la surface microstructurée (18) étant fabriquées dans un procédé de moulage par injection, un procédé de gravure, un procédé de matriçage, un procédé d'usinage par faisceau électronique ou un procédé d'usinage par faisceau laser.

14. Capteur de pression (10) selon l'une des revendications précédentes, la première et la seconde feuilles de support étant collées l'une à l'autre.
